# EUROPEAN PATENT APPLICATION

(11) **EP 2 413 629 A1**
(43) Date of publication of application: **01.02.2012**
(21) Application number: 10171443.4
(22) Date of filing: 30.07.2010
(51) Int. Cl.: H04W 28/18

(54) **Method and user equipment for managing a data transmission in a communication network**

(71) Applicant: Telefonaktiebolaget L M Ericsson (Publ), 164 83 Stockholm (SE)
(72) Inventor: Biss, Kristian, 91220, Schnaittach (DE); Hierl, Gerhard, 90425, Nürnberg (DE); Kleinheinz, Thomas, 90409, Nürnberg (DE)
(74) Representative: Neuerburg, Gerhard

(57) **Abstract**

A method of managing a data transmission in a communication network (300) is provided. The data transmission in the communication network (300) comprises a downlink data transmission and an uplink data transmission. The method is executed by a user equipment (308). The method comprises determining a parameter value of a parameter associated with the data transmission, and adapting the data transmission in the communication network (300) based on the determined parameter value.

## Description

### Technical field

The invention relates to telecommunication, particularly to managing a data transmission in a communication network, and a user equipment for managing a data transmission in a communication network.

### Background

Introduction of the long term evolution (LTE) radio access network has provided the possibility of transmitting voice and media data at high data rates both in downlink and uplink direction. In particular, the downlink data rate associated with the downlink data transmission from the LTE network to a user equipment and the uplink data rate associated with the uplink data transmission from the user equipment to the LTE network are specified to be at least about 100 Mbps (Megabits per second) and 50 Mbps, respectively.

A communication architecture of the LTE network comprises base stations called eNodeBs each of which being configured for simultaneously communicating with multiple user equipments and for communicating with multiple Mobility Management Entities (MMEs) and/or Serving Gateways (S-GW) of an Evolved Packet Core (EPC) network. Data transmission between a user equipment and an eNodeB is accomplished across a data link layer also being referred to as "Layer 2" of a seven layer Open Systems Interconnection (OSI) model.

Maximum or peak downlink and uplink data rates associated with downlink and uplink data transmissions between the user equipment and the eNodeB of the LTE network are, amongst others, determined by capability parameters of the user equipment. As known from 3GPP Technical Specification 36.306, a "ue-Category" parameter defines such user equipment radio access capability parameters in terms of a maximum downlink data rate, a maximum uplink data rate, and a Layer 2 buffer size usable for processing and/or storing data during a data transmission. According to the defined standard, a user equipment may be classified into five categories. For example, a user equipment of ue-Category 3 comprises a downlink data rate of 102.048 Mbps, an uplink data rate of 51.024 Mbps, and a Layer 2 buffer size of 1400 Mbytes.

An user equipment notifies a serving eNodeB about its capability parameters prior to a data transmission using a "UECapability" transfer procedure as specified, for example, in the 3GGP Technical Specification 36.331. After this notification, the LTE network has to respect the signaled UE radio access capability parameters when configuring the data transmission to and from the user equipment regarding the usable downlink and uplink data rates and a timing of sending the data in the uplink and downlink data transmissions.

Simultaneously receiving data in a downlink data transmission and sending data in an uplink data transmission both at the maximum allowed downlink and uplink data rates specified according to the capability parameters of the user equipment may result in exceeding data processing and/or data storing resources of the user equipment during the data transmission. Accordingly, such an overload of the user equipment resources may lead to data losses in the user equipment during the data transmission, capacity and/or time consuming data retransmission procedures, etc. Further, the overload of the resources of the user equipment may come along with an overheating of hardware components of the user equipment eventually resulting in a failure of particular hardware components of the user equipment. Therefore a user experience associated with the data transmission may be significantly decreased.

### Summary

It may be an object of the invention to improve a user experience associated with a data transmission in a communication network.

In order to achieve the object defined above, a method of managing a data transmission in a communication network, a user equipment for managing a data transmission in a communication network, a program-element, and a computer-readable medium according to the independent claims are provided.

According to an exemplary aspect of the invention, a method of managing a data transmission in a communication network is provided. The data transmission in the communication network comprises a downlink data transmission and an uplink data transmission. The method is executed by a user equipment. The method comprises determining a parameter value of a parameter associated with the data transmission, wherein the parameter is associated with a processing workload of the user equipment during a data processing associated with the data transmission. The method comprises adapting the data transmission in the communication network based on the determined parameter value.

According to another exemplary aspect of the invention, a user equipment for managing a data transmission a communication network is provided. The data transmission in the communication network comprises a downlink data transmission and an uplink data transmission. The user equipment comprises a determining unit configured for determining a parameter value of a parameter associated with the data transmission and an adapting unit configured for adapting the data transmission in the communication network based on the determined parameter value.

According to another exemplary aspect of the invention the parameter is associated with a processing workload of the user equipment during a data processing associated with the data transmission

According to another exemplary aspect of the invention, a system for managing a data transmission in a communication network is provided. The system comprises a user equipment and (particularly a node of) the communication network. A data transmission in the communication network (particularly between the user equipment and the node) comprises a downlink data transmission and an uplink data transmission. The system is configured for determining a parameter value of a parameter associated with the data transmission, and for adapting the data transmission in the communication network based on the determined parameter value.

According to another exemplary aspect of the invention, a program element is provided. The program element, when being executed by a processor, is adapted to carry out or control a method of managing a data transmission in a communication network as described above.

According to another exemplary aspect of the invention, a computer-readable medium is provided. In the computer-readable medium a computer program for managing a data transmission in a communication network is stored. The computer program, when being executed by a processor, is adapted to carry out or control a method of managing a data transmission in a communication network as described above.

In the context of this application, the term "communication network" may particularly denote any communication network with which a user equipment may communicate. In particular, the communication network may be adapted as a radio access network, for example a Long Term Evolution (LTE) network, a GSM Edge Radio Access Network (GERAN), or an UMTS Terrestrial Radio Access Network (UTRAN), which may connect a user equipment with a core network. In particular, the user equipment may form part of the communication network.

The term "data transmission" may particularly denote a transfer of data, particularly voice data and/or media data, between (particularly a node of) the communication network and a user equipment. In particular, the term "downlink data transmission" may particularly denote a data transmission directed from (particularly the node of) the communication network to the user equipment. In particular, the term "uplink data transmission" may particularly denote a data transmission directed from the user equipment to (particularly the node of) the communication network.

The term "parameter value of a parameter associated with the data transmission" may particularly denote a number assigned to a measurable quantity associated with a data transmission in a communication network.

The term "processing workload" of the user equipment during a data processing associated with the data transmission may particularly denote a (particularly momentary or current) performance characteristic of the user equipment, for example, a (particularly momentary or current) usage of processing and/or data storing resources or capacities of the user equipment, during the (particularly uplink and/or downlink) data transmission. In particular, the term may denote the usage of the resources of the user equipment during processing and/or storing data associated with a reception and/or transmission during the data transmission.

According to the exemplary aspects of the invention, a flow control of a data transmission between (particularly a node of) a communication network and a user equipment may be provided. The flow control may be executed by or at the user equipment in that the user equipment may adapt the data transmission in the communication network based on an effect or impact of the data transmission on the user equipment. In order to determine whether an effect of the data transmission in the user equipment may be present and/or to quantify the effect of the data transmission on the user equipment, the user equipment may determine a parameter value of a parameter associated with the data transmission. The parameter may be related to a processing workload of the user equipment during a data processing associated with the data transmission and may thus (particularly quantitatively) indicate the effect of the data transmission on the user equipment. In particular, the user equipment may increase and/or decrease the effect of the data transmission in the communication network on itself by selecting a suitable level of adaption. In particular, an overload of data processing and/or data storing resources of the user equipment and/or an overheating of hardware components of the user equipment may be reduced by adapting the data transmission in the communication network. Thus, an operational performance of the user equipment and a user experience associated with the data transmission may be significantly improved.

Further, adapting the data transmission in the communication network may be accurately performed, since the adapting may be based on knowledge of an actual, current impact of the data transmission on (particularly the processing workload of) the user equipment.

Further, managing the data transmission in the communication network may be easily performed, since both the determining and the adapting may be executed by the same communication network entity, namely the user equipment, without a capacity consuming involvement of further communication network entities.

Next, further exemplary embodiments of the method of managing a data transmission in a communication network will be explained. However, these embodiments also apply to the respective user equipment, the respective system, the respective computer program, and the respective computer-readable medium.

In particular, the processing workload of the user equipment may be timely alterable particularly during one data transmission, particularly during a sending of one communication message comprising a data frame. Thus, an accuracy of the adapting of the data transmission in the communication network may be further improved, since knowledge of a value of the processing workload of the user equipment may directly relate to the influence of the data transmission on the user equipment.

In particular, the user equipment may adapt a (particularly future) transmission characteristic of the data transmission (for example, a data rate during the data transmission). In particular, the adapted transmission characteristic may be identical to the parameter associated with the determined parameter value.

A parameter associated with the parameter value may comprise at least one of a thermal heat associated with a data processing of the user equipment during the data transmission, and a data rate associated with at least one of the downlink data transmission and the uplink data transmission. In particular, the parameter may comprise a combined data rate associated with the downlink and uplink data transmissions in the communication network. In particular, the combined data rate associated with the downlink and uplink data transmissions may be a sum of the downlink data rate associated with the downlink data transmission and the uplink data rate associated with the uplink data transmission. These parameters may represent measurands representative of an effect of the data transmission on the user equipment, whereby a relation between the effect of the data transmission on the user equipment and a subsequent adaption of the data transmission may be provided. In particular, a thermal heat may indicate an overheating of hardware components of the user equipment eventually resulting from an overload of data processing and/or data storing resources of the user equipment and/or a continuous processing of data during the data transmission. In particular, a data rate associated with at least one of the downlink data transmission and the uplink data transmission may indicate an overload of data processing and/or data storing resources of the user equipment during the data transmission.

The method may comprise comparing the determined parameter value with a parameter value limit. In particular, the parameter value limit may correspond to a parameter threshold value. In particular, the user equipment may not adapt the data transmission in the communication network in a case in which the determined parameter value may be less than (and optionally equal to) the parameter value limit. Accordingly, the user equipment may adapt the data transmission in the communication network in a case in which the determined parameter value may be greater than (and optionally equal to) the parameter value limit. In particular, the adapting procedure may be vice versa for the latter described cases. The comparing may thus provide a basis for the user equipment to determine or to decide whether to adapt the data transmission in the communication network.

In particular, the parameter value limit may be a number which may be predetermined or preconfigured by a manufacturer of the user equipment according to user equipment capability parameters and/or hardware component requirements of the user equipment. In particular, the parameter limit value may be manually set by a user of the user equipment.

The adapting may comprise sending information for causing the network to adapt the data transmission. Thus, the flow control executed by the user equipment may be mediated by (particularly the node of) the communication network. In particular, the communication network may be forced to adapt the data transmission in the communication network based on the information received from the user equipment. Thus, already existing procedures of distributing data transmission resources in the communication network may be used, thereby facilitating the data flow control executed by the user equipment in terms of redundantizing a modification of an already existing architecture of the communication network.

The information may be sent using a communication protocol used for communicating within the communication network. In particular, in a case of a data transmission over a data link layer also referred to as "Layer 2", suitable communication protocols may be an Ethernet protocol, a User Datagram Protocol (UDP), and a Transmission Control Protocol (TCP).

The information may indicate a transmission characteristic associated with the (particularly momentarily ongoing) data transmission in the communication network. Thus, (particularly the node of) the communication network may easily associate the current transmission characteristic indicated by the received information with the future transmission characteristic to be adapted, since both may represent similar quantities. Further, the flow control executed by the user equipment is transparent or not visible for (particularly the node of) the communication network, since the user equipment may provide information about the ongoing data transmission but may not indicate a performance modification of the user equipment.

In particular, the information may comprise a value or number associated with the transmission characteristic. In particular, (particularly the node of) the communication network may comprise knowledge about an association of the received number with the transmission characteristic to be adapted, such that (particularly the node of) the communication network may deduce from the received number a kind and/or a level of a required adaption of the data transmission. In particular, (particularly the node of) the communication system may comprise a look-up table(s) in which such an association may be stored.

The information may be included in a communication message being periodically sent for reporting a transmission characteristic associated with the data transmission. In particular, the transmission characteristic being periodically reported may be identical to the transmission characteristic indicated by the sent information. Thus, already existing communication procedures between the user equipment and the communication network may be employed, thereby facilitating the method.

In particular, the adapting comprises repeatedly, particularly periodically, sending information for causing the network to adapt the data transmission. In particular, the information being sent at different time points may be identical to one another or may be different from one another. Thus, the adapting of the data transmission in the communication network may be executed until an impact of the data transmission on (particularly the processing workload of) the user equipment (particularly an overload and/or overheating of the user equipment) may be adapted particularly to a desired level. Further, the adapting of the data transmission may be dynamically performed according to a momentary required level of adaption of the data transmission, since (particularly the node of) the communication system may be repeatedly forced to adapt the data transmission.

The adapting may comprise adapting at least one of the downlink data transmission and the uplink data transmission in the communication network. In particular, the adapting of the downlink data transmission and the uplink data transmission may be executed simultaneously or subsequently to one another. Providing two different measures for adapting the data transmission in the communication network may further improve the accuracy of the adapting of the data transmission, since multiple levels of adaption of the data transmission may be accomplished, thereby accurately adapting the effect of the data transmission in the communication network on the user equipment.

The adapting may comprise sending information indicating a communication quality of the downlink data transmission, wherein a communication quality value indicated by the sent information may be different from an actual communication quality value of the downlink transmission. In particular, the information indicating a communication quality of the downlink transmission may be identical to or maybe included in the sent information for causing the communication network to adapt the data transmission. Thus, the user equipment may send information indicating a wrong or false communication quality of the downlink data transmission, such that (particularly the node of) the communication network may adapt a downlink data transmission, particularly a data rate associated with the downlink data transmission, based on the received information. Thus, receiving data in a downlink transmission at an adapted data rate may alter the impact of the downlink data transmission on the user equipment. In particular, a reduced downlink data rate may result in decreased workload of processing resources of the user equipment during processing data associated with the downlink data transmission, such that an overheating of hardware components of the user equipment and/or an overload of data processing and/or storing resources of the user equipment may be decreased or prevented. In particular, increasing a downlink data rate may result in a faster downlink data transmission. Accordingly, a user experience associated with the data transmission may be significantly improved.

In particular, the information indicating a communication quality may comprise a Channel Quality Indicator (CQI) value which may indicate a communication quality of an ongoing downlink data transmission in the LTE, GERAN, and UTRAN network. In particular, (particularly the node) of the communication network may accordingly increase or decrease the downlink data rate to account for a high or low quality of the downlink data transmission.

The adapting may comprise sending information indicating an amount of data to be sent in the uplink data transmission, wherein a value of the amount of data indicated by the sent information is different from a value of an amount of data being available for the uplink data transmission. In particular, the information indicating an amount of data to be sent may be identical to or maybe included in the sent information for causing the communication network to adapt the data transmission. Thus, (particularly the node of) the communication network may allocate or grant (an amount of) data resources for an ongoing uplink transmission based on the wrong or false information, such that an uplink data rate used by the user equipment may be accordingly changed. In particular, indicating less data available for an uplink transmission may result in a reduced uplink data rate, whereby an overload and/or overheating of the user equipment may be accordingly decreased. In particular, indicating more data available for an uplink transmission may result in an increased uplink data rate, whereby a backlog of data available in the user equipment may be successively decreased or reduced particularly in a faster way.

In particular, the information indicating an amount of data to be sent may comprise a Buffer Status Report (BSR) value or an E-DCH Buffer Status (TEBS) value which may indicate an amount of data available in the user equipment to be sent in an uplink data transmission in the LTE network or the GERAN/UTRAN network, respectively. In particular, (particularly the node) of the communication network may accordingly increase or decrease the uplink data rate to account for more or less data available in the user equipment and to be sent in an uplink data transmission.

With respect to the sending of the adapted information indicating a wrong communication quality and/or the adapted information indicating a wrong amount of data to be sent a respective flow control performed by the user equipment may be transparent or invisible to (particularly the node of) the communication network, since (particularly the node of) the communication network may only receive these information without knowledge about the actual or correct information. In particular, when anew receiving another information, (particularly the node of) the communication network may anew adapt the data transmission, since (particularly the node of) the communication network may only observe a change in the data transmission but does not conclude to the origin of the observed change.

The value of the amount of data to be sent in the uplink data transmission may be determined based on at least one of a downlink data rate, an uplink data rate, a downlink data processing time, and an uplink data processing time. In particular, the user equipment may determine at least one of a downlink data rate value, an uplink data rate value, a downlink data processing time value, and an uplink data processing time value particularly (immediately) prior to the determining of the value of the amount of data to be sent in the uplink data transmission. In particular, a kind of communication bearer used during the data transmission may be taken into account for calculating the amount of data to be sent. Thus, the value of the amount of data to be sent may be a function of at least one of these four parameters and may be calculated by the user equipment, whereby the level of adaption may be set by the user equipment based on actual requirements.

The adapting may comprise monitoring a processing workload during a data processing associated with the uplink data transmission in the user equipment, particularly associated with the downlink data transmission and uplink data transmission in the user equipment. In particular, the processing workload of the user equipment with which the parameter may be associated may include or may be identical to the processing workload during a data processing associated with the uplink data transmission in the user equipment, particularly associated with the downlink data transmission and uplink data transmission in the user equipment. In particular, the adapting may be based on the monitored processing workload. Therefore, timing or scheduling of the adapting of the data transmission in the communication network may be significantly improved, since the user equipment may adapt a future uplink data transmission based on effectively usable, i.e. not occupied, data processing resources of the user equipment. In particular, in a case in which the user equipment may be required to send in an uplink transmission the allocated amount of data immediately subsequent to a reception of the allocation or grant of the data resources for the uplink transmission, the user equipment may influence the timing of the sending of a particular amount of data based on an actual usable processing workload in that the user equipment may use a knowledge of the currently used processing resources and may accordingly determine how much data may be send in a future uplink transmission without exceeding the overall available processing resources of the user equipment. In particular, the user equipment may assume the downlink data transmission being invariant with time.

The determining may comprise determining the parameter value in a time interval. Thus, the determining of the parameter value may be based on an average parameter value. Accordingly, the adapting of the data transmission may only be executed in a case in which an adaption of the data transmission may be required when seen over a time interval. Therefore continuous adaption processes may be prevented, thereby saving network capacities. Further, a parameter value being wrongly determined at a particular time point of the time interval may not influence the determining of the parameter value, since this wrongly determined parameter value may be averaged out. Thus, reliability of the determining of the parameter value may be enhanced and a respective adapting of the data transmission in the communication network may be thus further improved.

The aspects defined above and further aspects of the invention are apparent from the examples of embodiments to be described herein after and are explained with reference to these examples of embodiment.

### Brief description of the drawings

Embodiments of the invention will be described in more detail herein after with reference to examples, but to which the scope of the invention is not limited.
Fig. 1 is a schematic block diagram illustrating a communication architecture comprising a LTE radio access network.
Fig. 2 is a flow diagram illustrating a method of managing a data transmission in the LTE radio access network of Fig. 1 according to an exemplary embodiment of the invention.
Fig. 3 is a flow diagram on a node level illustrating the method of managing the data transmission in the LTE radio access network of Fig. 2 in more detail.
Fig. 4 is a block diagram illustrating a constitution of a user equipment according to an exemplary embodiment of the invention.

### Detailed description

The illustration in the drawing is schematic. In different drawings, similar or identical elements are provided with the same reference signs.

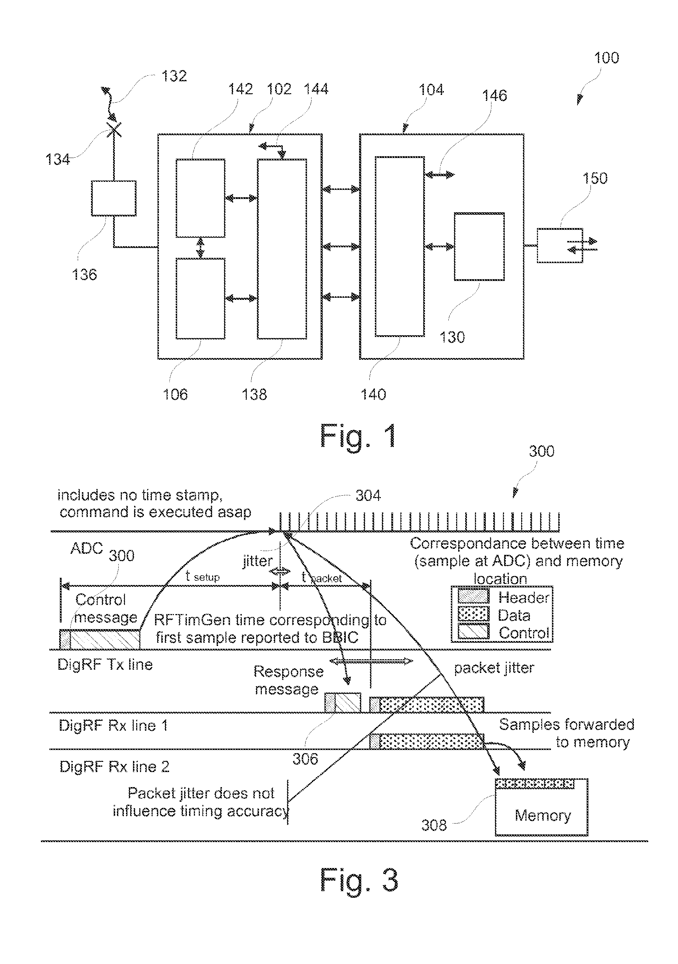

Referring to Fig. 1, a communication architecture of a communication network 100 is illustrated.

The communication network 100 is adapted as a Long Term Evolution (LTE) radio access network comprising multiple eNodeBs 102a-c. The eNodeBs 102a-c are interconnected to one another via X2 interfaces. The eNodeBs 102a-c are also connected to an Evolved Packet Core (EPC) 104 via S1 interfaces. In particular, interconnections to Mobility Management Entities (MMEs) and Serving Gateways (S-GWs) are accomplished via S1-MME interfaces and via S1-U interfaces, respectively. For simplicity of illustration, one MME and one S-GW are illustrated as a combined network entity 106a, b. The S1 interface supports a many-to-many relation between the MMEs / Serving Gateways 106a, b and the eNodeBs 102a-c. Each eNodeB 102a-c is also connected to multiple user equipments 108a, b via LTE-Uu interfaces. In the illustrated communication architecture, the eNodeB 102a serves two user equipments 108a, b.

Data resources associated with data transmissions with the multiple user equipments 108a, b are allocated by the serving eNodeB 102a in a fair way dependent on transmission parameters such as a priority assigned to the data to be transmitted. Further, data are transmitted between the eNodeB 102a and the user equipment 108a in downlink and uplink directions, i.e in a direction from the eNodeB 102a to the user equipment 108a and in a direction from the user equipment 108a to the eNodeB 102a, respectively.

The data transmission is accomplished over a "data link layer" which is also referred to as "Layer 2". The transmitted data are comprised in communication messages comprising data frames each of which comprising several data transport blocks, wherein each of the data blocks comprises a time length of one Time Transmission Interval (TTI) equaling to about 1 millisecond.

Specifications of the LTE radio access network 100 ascertain a maximum downlink data rate of at least about 100 Mbps and a maximum uplink data rate of at least about 50 Mbps. Actual maximum downlink and uplink data rates supported by the user equipment 108a as well as Layer 2 memory resources of the user equipment 108a usable for data processing and/or storing during a data transmission are specified according to a "ue-Category" parameter (cf. for example, 3GPP Technical Specification 36.306). Information indicating these user equipment radio access capabilities is transmitted from the user equipment 108a to the eNodeB 102a using a "UECapability" transfer procedure which is, for example, defined in the 3GPP Technical Specification 36.331. After reception of this information the eNodeB 102a is obliged to respect the signaled user equipment radio access capabilities when configuring the data transmission to and from the user equipment 108a. In turn, the user equipment 108a is required to immediately send the requested data in an uplink data transmission at a respective requested uplink data rate when receiving an allocation or grant notification specifying a timing and an amount of data to be sent.

During a data transmission the user equipment 108a may be requested to send data in an uplink data transmission at its maximum or peak uplink data rate and simultaneously receives data in a downlink data transmission at its maximum or peak downlink data rate, whereby data processing and/or data storing resources in the user equipment may be exceeded with respect to the maximum workload thereof. Thus, an overload of the user equipment resources and/or an overheating of hardware components of the user equipment may occur and, consequently, a quality of the data transmission between the user equipment 108a and the eNodeB 102a will be reduced. For example, the user equipment 108a is forced to drop data or to reduce a performance of higher communication layers, etc.

In order to improve the performance of the user equipment during a data transmission between the user equipment 108a and the eNodeB 102a and thus increase a user experience associated with the data transmission, the user equipment 108a is configured for managing the data transmission in the LTE network 100.

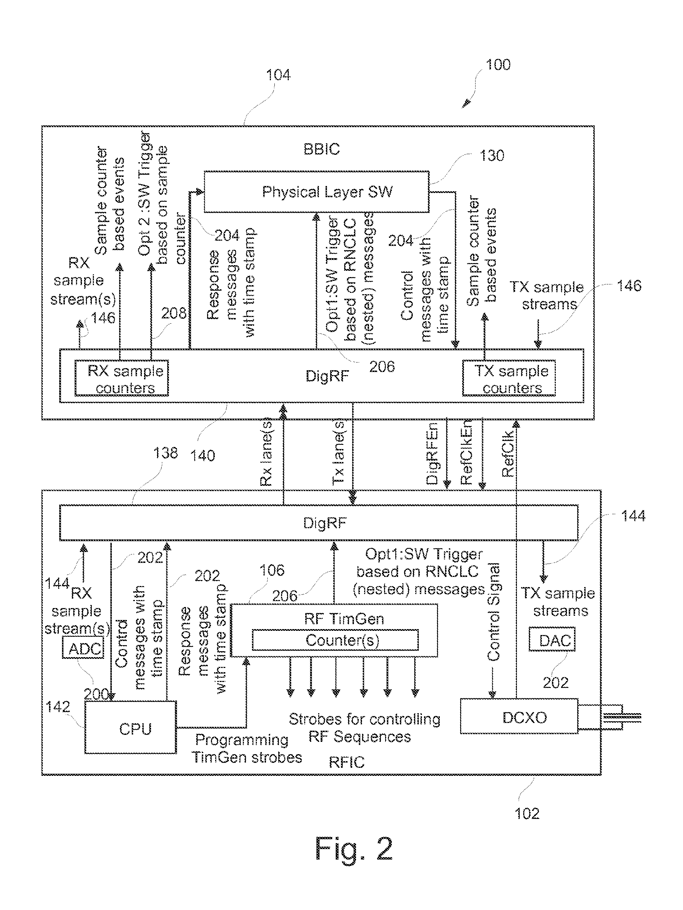

Referring to Fig. 2, a method of managing the data transmission in the LTE radio access network 100 of Fig. 1 according to an exemplary aspect of the invention will be explained. The method is executed by the user equipment 108a.

According to a block 212, the user equipment 108a determines a parameter value of a parameter associated with the data transmission. The parameter is associated with a processing workload of the user equipment 108a during a data processing associated with the data transmission. Thereupon, according to a block 214, the user equipment 108a compares the determined parameter value with a parameter value limit. According to a block 216, the user equipment 108a thereafter adapts the data transmission in the LTE radio access network 100 based on the determined parameter value.

The parameter associated with the parameter value is a momentary combined data rate associated with the ongoing downlink and uplink data transmissions at which the user equipment 108a is currently operating.

Referring to Fig. 3, the method of managing a data transmission in the LTE radio access network of Fig. 2 will be explained in more detail. The communication architecture illustrated in Fig. 3 is identical to the communication architecture illustrated in Fig. 1.

An eNodeB 302 of a LTE radio access network 300 allocates the data resources associated with a downlink transmission for the user equipment 308 and accordingly sends the data to the user equipment 308 at a respective downlink data rate. The eNodeB 302 further allocates data resources associated with an uplink data transmission for the user equipment 308 by sending an Uplink Grant to the user equipment 308 indicating the amount of data resources, i.e. timely predetermined data transport blocks of a data frame, which the user equipment 308 is allowed to use in the uplink transmission. The UL Grant is sent in a data transport block of a data frame of a respective downlink Layer 2 message.

In order to manage the data transmission in the LTE network 300, the user equipment 308 checks an overload parameter, namely the combined data rate associated with the downlink and uplink data transmissions. To this end, the user equipment 308 continuously monitors the combined data rate and determines a value of the combined data rate for subsequent time intervals during the data transmission in that the user equipment 308 counts the amount of the transmitted downlink and uplink data within each time interval. In the illustrated embodiment, the combined data rate is determined for time intervals of a length of 16 TTI corresponding to about 16 milliseconds. The combined data rate is then calculated by the user equipment 308 as a quotient between the counted amount of data and the length of the respective time interval. In a first determination step, the determined combined data rate adds up to 120 Mbps.

The user equipment 108a then compares the determined value of combined data rate with a limit value or threshold value of the combined data rate which is set to be 110 Mbps. This threshold value is preconfigured by the manufacturer of the user equipment 308, in order to account for a malfunction of the user equipment 308 when simultaneously operating at its maximum uplink and downlink data rates. It may be also possible that the user of the user equipment 308 may further limit the threshold value to a lower number to ensure continuously successful operation of the user equipment 308.

Thereupon, the user equipment 308 determines whether to adapt the data transmission in the LTE network 300, in order to enhance the performance of the user equipment 308 during the data transmission. The user equipment 308 accesses an algorithm stored in the user equipment 308 which functions according to the following principle: In a case in which the determined value of the combined data rate is below the threshold value of the combined data rate, the user equipment 308 determines that no adaption of the data transmission in the LTE network 300 is required. However, in a case in which the determined value of the combined data rate is equal to or exceeds the threshold value of the combined data rate, the user equipment 308 determines that an adaption of the data transmission in the LTE network 300 is required.

Thus, the user equipment 308 determines that the determined combined data rate value exceeds the threshold value of the combined data rate. Accordingly, the user equipment 308 detects an overload of resources of the user equipment 308 and adapts the data transmission in the LTE network 300 by adapting both the downlink data rate and the uplink data rate used during the data transmission with the eNodeB 302. Hence, the user equipment 308 indicates to the eNodeB 302 a low communication quality of the momentarily ongoing downlink transmission and a reduced amount of data currently stored in the user equipment 308 for sending in a future uplink data transmission.

In order to indicate the low communication quality of the downlink data transmission, the user equipment 308 makes use of a periodically, i.e. at every 16th TTI, reported Channel Quality Indicator (CQI) value which indicates the channel quality of the downlink transmission. For a definition of the CQI it is referred to, for example, the 3GPP Technical Specification 36.213. The user equipment 308 adapts the CQI value to a reduced value compared to the actual value, such that the eNodeB 302 is notified of a poor communication quality of the downlink data transmission.

Further, the user equipments 308 employs a Buffer Status Report (BSR) parameter as defined in the 3GPP Technical Specification 36.321. The BSR parameter is used for periodically, i.e. at every 16 TTI, reporting an amount of data to be sent to the eNodeB 302 in an uplink transmission. Hence, the user equipment 308 notifies the eNodeB 302 of a reduced BSR value indicating that less amount of data is available in the user equipment 308 for the uplink transmission compared to the effectively available amount of data. The reduced BSR value reported to the eNodeB 302 is calculated by the user equipment 308 using a function dependent on actual uplink and downlink data rate values and an uplink processing time value required for processing a data block of a particular size in a particular time period. In order to calculate the reduced BSR value, the user equipment 302 takes into account to which level the BSR value has to reduced compared to the correct BSR value by calculating differences between the actual downlink and uplink data rates and the desired downlink and uplink data rates. Further, a dependency of the BSR value on the kind of data radio bearers used during the uplink data transmission is considered.

Both the adapted CQI and BSR values are comprised in data transport blocks of uplink data transmission messages. The adapted CQI is sent to the eNodeB 302 via the Physical Uplink Control Channel (PUCCH) wherein the CQI and the PUCCH is defined in the 3GPP Technical Specification 36.213. The adapted BSR is sent to the eNodeB 302 via the PUSCH according to a Media Access Control (MAC) standard specified in the 3GPP Technical Specification 36.321.

In order to adapt a timing of the uplink data transmission, the user equipment monitors a workload during a data processing associated with the uplink data transmission. Hence, the user equipment 308 may determine when sufficient processing resources in the user equipment 308 are available for handling a future uplink transmission. The user equipment 308 may then accordingly schedule the sending of the BSR value to the eNodeB 302 and/or further adapt the sent BSR value.

After reception of the CQI value and the BSR value, the eNodeB 302 slows down the momentarily used downlink and uplink data rates by allocating reduced amount of data resources for the downlink data transmission and the uplink data transmission. In order to associate the received CQI value with reduced downlink data rates, the eNodeB 302 uses a stored knowledge about a complex association between the CQI values and intervals of amounts of data sent in a downlink data transmission per TTI. Further, the eNodeB 302 uses a stored knowledge about an association between the BSR values with intervals of amounts of data sent in an uplink transmission per TTI.

Decreasing the downlink rate of the downlink data transmission is accomplished by the eNodeB 302 by decreasing the amount of data sent per TTI.

Allocating data resources for the uplink data transmission may be accomplished by the eNodeB 302 by allowing the user equipment 308 to send data blocks (of different sizes) in parallel within one TTI, to send several data blocks (of different sizes) within subsequent TTIs, or to send several data blocks (of different sizes) within timely not adjacent TTIs. There is a time delay of 4 TTIs between the eNodeB 302 sending an Uplink Grant and the user equipment 302 sending the data in an uplink data transmission.

According to the reduced data rates associated with the uplink and downlink transmissions, a workload of the data processing and/or data storing resources in the user equipment 308 associated with the uplink and downlink data transmissions is reduced and the detected overload of the user equipment resources will steadily decrease.

As shown in a central part of Fig. 3, the user equipment 308 anew determines a value of the combined downlink and uplink data rates for a subsequent time interval resulting in a determined value of 90 Mbps. Thereupon the user equipment 308 anew compares the determined combined data rate value with the threshold value of the combined data rate of 110 Mbps. According to the algorithm used by the user equipment 308 to decide whether to adapt the data transmission in the LTE network 300, the user equipment 308 determines that no adaption of the data transmission is required. Consequently, the user equipment 308 sends correct CQI and BSR values to the eNodeB 302. After reception of the CQI and BSR values the eNodeB 302 accordingly anew distributes the network resources associated with the uplink and downlink data transmissions.

In a case in which the data available in the user equipment 308 have been completely sent before a subsequent determination step will be executed and/or before a subsequent BSR value will be reported, the eNodeB 302 may interrupt the uplink transmission and may use the data resources allocated to the uplink transmission differently.

In a case in which the determination of the combined data rate value is performed at greater time intervals than the periodically sending of the CQI and BSR values, the user equipment 308 sends the once calculated CQI and BSR values until a subsequent determination of the combined data rate value and the calculation of another CQI and BSR values will take place.

In another embodiment, as shown in the lower part of Fig. 3, the user equipment 308 may store another algorithm comprising a further determination step compared to the above described algorithm. The user equipment first determines whether processing resources of the user equipment 308 are overloaded using the above described algorithm, and then determines whether an increased amount of data is available in the user equipment 308 which has not been sent in an uplink data transmission. Based on the measuring of a combined data rate of 90 Mbps and the stored threshold value of 110 Mbps, the user equipment 308 determines that no overload of user equipment resources is present. When determining that further data are available in the user equipment 308, the user equipment 308 calculates to which level the currently used uplink data rate may be increased for a future uplink data transmission without exceeding the threshold value of the combined data rate during the future uplink data transmission. Then, the user equipment 308 calculates an adjusted BSR value which is increased compared to the correct BSR value. Thereupon, the user equipment 308 sends the increased BSR value and a correct CQI value to the eNodeB 302 which in turn allocates increased data resources for the uplink transmission but does not modify the data resources of the downlink transmission. Accordingly, the eNodeB 302 sends an uplink grant indicating a higher amount of data to be sent, whereas the eNodeB 302 does not modify the current downlink data transmission. As a result, the data available in the user equipment 308 for the uplink transmission will be sent at a higher uplink data rate, in order to reduce the backlog of the data available in the user equipment 308 faster. Concurrently, the downlink data rate of the downlink data transmission remains constant. Thus, a workload of the processing resources of the user equipment 308 will increase but will not result in an undesired overload situation.

The user equipment 308 may also send an increased BSR value and meanwhile send a reduced CQI to cause the eNodeB 302 to increase the uplink data rate and reduce the downlink data rate. Hence, the adapted downlink and uplink data rates may counteract one another, such the combined data rate may remain below the threshold value.

The performed management of the data transmission in the LTE network 300 is transparent or not visible for the serving eNodeB 302, since the eNodeB 302 receives the CQI and BSR values and thereupon distributes the network resources for the data transmission resources in the LTE network 300 and modifies the downlink and uplink data rates. The eNodeB 302 is not aware of the actual quality of the communication channel used for a downlink transmission and the actually available amount of data in the user equipment 308 to be sent in an uplink transmission and may interpret subsequent different CQI values and BSR values in terms of a change in the channel quality and a change in the available amount of data, e.g. in a discard of data, in the user equipment 308, respectively.

It may be also possible to use a thermal heat of a processing unit of the user equipment 308 instead of the combined uplink and downlink data rates, in order to determine whether to adapt the data transmission in the communication network 300. The thermal heat generated by hardware components of the user equipment 308 indicates a workload of processing resources of the user equipment 308 during the processing of data associated with the downlink and uplink data transmissions.

The data transmission management has been described with respect to the LTE radio access network 300, but the underlying principle is also applicable to other radio access networks such as GERAN and UTRAN. Hence, respective communication partners of the user equipment 308 are a Base Station Controller (BSC) node of the GERAN network or a Node B of the UTRAN network. Data transport mechanisms of these radio access networks also make use of Layer 2 data transport processes, wherein managing the data transmission in the respective networks is also performed using equivalent flow control mechanisms particularly based on a channel quality indicator (CQI) and a E-DCH buffer status (TEBR) parameter.

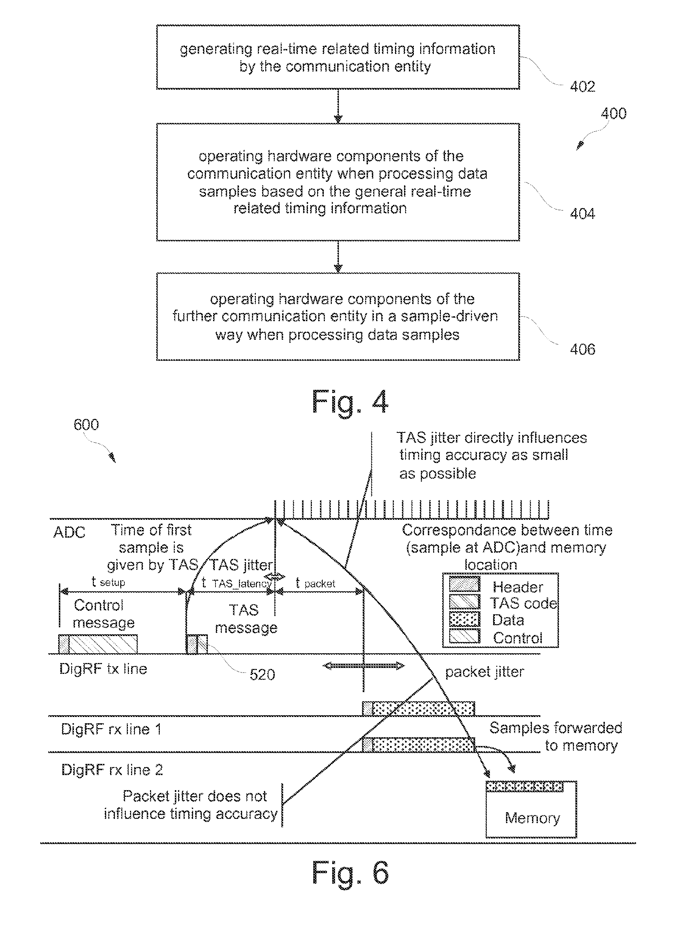

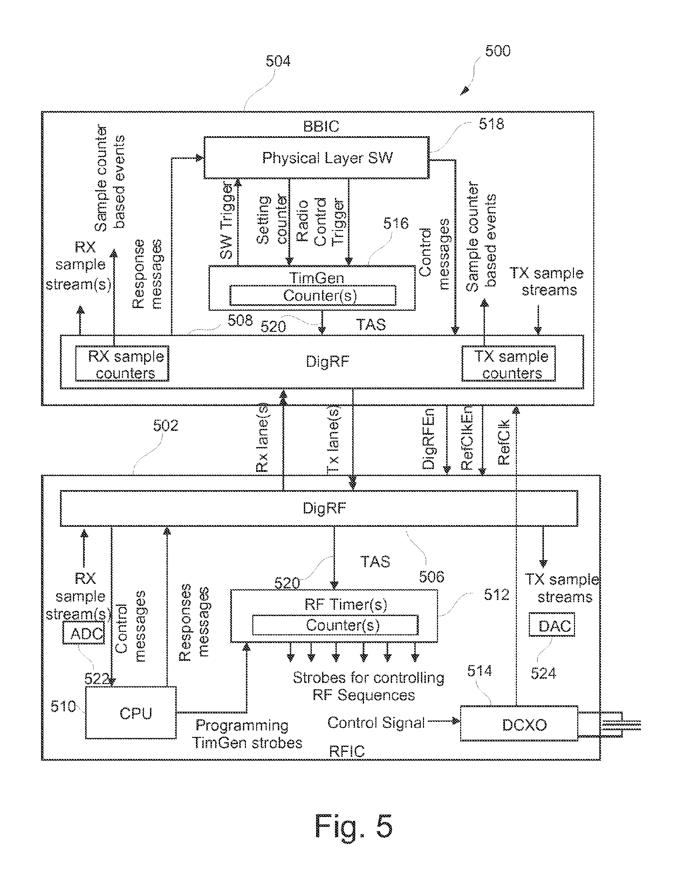

Referring to Fig. 4, a constitution of a user equipment 408 according to an exemplary embodiment of the invention will be explained.

The user equipment 408 comprises a transmitting unit T100 configured for sending information, particularly data, to a communication network. Further, the user equipment 408 comprises a reception unit R100 configured for receiving information, particularly data, from the communication network. Further, the user equipment 408 comprises a processing unit P100 configured for processing information, particularly data, and a storage unit C100 configured for storing information, particularly data, associated with a data transmission in the communication network. In particular, the processing unit P100 comprises a determining unit configured for determining a parameter value associated with the data transmission and an adapting unit configured for adapting the data transmission in the communication network based on the determined parameter value. Further, the user equipment 408 comprises a sensing unit (not shown) configured for sensing a thermal heat of at least one hardware component of the user equipment 408, particularly of the processing unit P100.

It should be noted that the term "comprising" does not exclude other elements or steps and the use of the articles "a" or "an" does not exclude a plurality. Also elements described in association with different embodiments may be combined. It should also be noted that reference signs in the claims should not be construed as limiting the scope of the claims.

## Claims

1. A method of managing a data transmission in a communication network (100, 300), the data transmission in the communication network (100, 300) comprising a downlink data transmission and an uplink data transmission, the method being executed by an user equipment (108a, b, 308, 408), the method comprising
- determining (212) a parameter value of a parameter associated with the data transmission, and
- adapting (216) the data transmission in the communication network (100) based on the determined parameter value.

2. The method according to claim 1, wherein a parameter associated with the parameter value comprises at least one of a thermal heat associated with a data processing of the user equipment (108a, b, 308, 408) during the data transmission, and a data rate associated with at least one of the downlink data transmission and the uplink data transmission.

3. The method according to claim 1 or 2, the method comprising comparing (214) the determined parameter value with a parameter value limit.

4. The method according to anyone of claims 1 to 3, wherein the adapting (216) comprises sending information for causing the network (100, 300) to adapt the data transmission.

5. The method according to claim 4, wherein the information indicates a transmission characteristic associated with the data transmission in the communication network (100, 300).

6. The method according to claim 4 or 5, wherein the information is included in a communication message being periodically sent for reporting a transmission characteristic associated with the data transmission.

7. The method according to anyone of claims 1 to 6, wherein the adapting (216) comprises adapting at least one of the downlink data transmission and the uplink data transmission in the communication network (100, 300).

8. The method according to anyone of claims 1 to 7, wherein the adapting (216) comprises sending information indicating a communication quality of the downlink data transmission, wherein a communication quality value indicated by the sent information is different from an actual communication quality value of the downlink transmission.

9. The method according to anyone of claims 1 to 8, wherein the adapting (216) comprises sending information indicating an amount of data to be sent in the uplink data transmission, wherein a value of the amount of data indicated by the sent information is different from a value of an amount of data being available for the uplink data transmission.

10. The method according to claim 9, wherein the value of the amount of data to be sent in the uplink data transmission is determined based on at least one of a downlink data rate, an uplink data rate, a downlink data processing time, and an uplink data processing time.

11. The method according to anyone of claims 1 or 10, wherein the adapting (216) comprises monitoring a processing workload during a data processing associated with the uplink data transmission in the user equipment (108a, b, 308, 408).

12. The method according to anyone of claims 1 to 11, wherein the determining (212) comprises determining the parameter value in a time interval.

13. A user (108a, b, 308, 408) equipment for managing a data transmission in a communication network (100), the data transmission in the communication network (100, 300) comprising a downlink data transmission and an uplink data transmission, the user equipment (108a, b, 308, 408) comprising
- a determining unit (P100) configured for determining a parameter value of a parameter associated with the data transmission, and
- an adapting unit (P100) configured for adapting the data transmission in the communication network (100, 300) based on the determined parameter value.

14. A program element, which program element, when being executed by a processor, is adapted to carry out or control a method of managing a data transmission in a communication network (100, 300) according to anyone of claims 1 to 12.

15. A computer-readable medium, in which a computer program for managing a data transmission in a communication network is stored, which computer program, when being executed by a processor, is adapted to carry out or control a method according to anyone of claims 1 to 12.
